(19) Europäisches Patentamt
European Patent Office
Office européen des brevets

(11) **EP 1 929 854 B1**

(12) **EUROPÄISCHE PATENTSCHRIFT**

(45) Veröffentlichungstag und Bekanntmachung des Hinweises auf die Patenterteilung:
**21.04.2010 Patentblatt 2010/16**

(51) Int Cl.:
**A01D 41/10** *(2006.01)* **A01D 89/00** *(2006.01)*

(21) Anmeldenummer: **07023311.9**

(22) Anmeldetag: **01.12.2007**

(54) **Aufnahmevorrichtung zum Aufnehmen von am Boden liegenden Erntegut**

Device for collecting crops lying on the ground

Dispositif de réception destiné à la réception de récoltes au sol

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **06.12.2006 DE 102006057827**

(43) Veröffentlichungstag der Anmeldung:
**11.06.2008 Patentblatt 2008/24**

(73) Patentinhaber: **CLAAS Saulgau GmbH 88348 Bad Saulgau (DE)**

(72) Erfinder: **Claas, Helmut, Dr. 33428 Harsewinkel (DE)**

(56) Entgegenhaltungen:
**GB-A- 1 036 972     US-A- 3 178 876 US-A- 4 739 610**

EP 1 929 854 B1

**Beschreibung**

Die Erfindung betrifft eine Aufnahmevorrichtung, ausgeführt als Pick up, zum Aufnehmen von am Boden liegenden Erntegut gemäß dem Oberbegriff der unabhängigen Ansprüche.

Aufnahmevorrichtungen dieser Art sind auch bekannt unter dem Namen Pick up. Sie werden verwandt um beispielsweise geschwadetes Erntegut, wie Grünfutter, Heu oder Stroh, vom Boden aufzunehmen, um dieses beispielsweise einem Feldhäcksler, einer Ballenpresse oder einem Ladewagen zuzuführen.

Aus der DE 36 34 577 ist eine Aufnahmevorrichtung (Pick up) bekannt, die es sich zur Aufgabe gestells hat, die Übergabe des Erntegutes von den Zinkenspitzen der Aufnahmetrommel und der Querförderschnecke zu verbessern, In dem der Abstand der Zinkenspitzen in der Betriebsstellung im oberen Bereich der Aufnahmetrommel und dem Umkreis der Förderschnecke in der gleichen Größenordnung wie der Abstand zwischen Förderboden und Förderschnecke liegt. Diese Maßnahme gilt jedoch lediglich zur Verbesserung der Gutübergabe bzw. des Gutflusses innerhalb der Aufnahmevorrichtung.

Die US-A-3178876 beschreibt ein Verfahren und eine Vorrichtung zum Betreiben einer Aufsammelnrichtung, bei der die Überstrichbreite der Zinken durch Schrägstellung des Aufsammelrotors variiert werden kann Es handelt sich dabei um ein an ein Zugfahrzeug anhängbares gezogenes Gerät zum seitlichen Verlagern von am Boden liegenden Schwaden, auch als Schwadenheber bekannt. Dabei ist die Aufnahmetrommel in einem Rahmengestell gelagert, weiches sich Ober Laufräder am Boden abstützt. Die verstellbare Schrägstellung des Aufsammelrotors wird herbeigeführt durch Schräg- und anschließender Feststellung der Laufräder, so dass das gezogene Gerät einschließlich der Aufnahmetrommel eine schräg verlaufende Ausrichtung quer zur Fahrtrichtung des Zugfahrzeugs einnimmt. Die Schrägstellung ist vorgesehen zur seitlichen Verlagerung des bereits am Boden liegenden Schwads.

Die Anforderungen an derartige Aufsammeleinrichtungen sind jedoch hinsichtlich der Durchsatzleistungen zwischenzeitlich erheblich gestiegen, da die Arbeitsbreiten der Aufnahmevorrichtungen ebenfalls erheblich zugenommen haben. Dabei existiert das Problem, dass bei geringen oder kurzen Futterbeständen, wie dieses beispielsweise bei Mehrfachschnitten in der fortschreitenden Erntesaison der Fall sein kann, durch die geringe Verkettung des gemähten und am Boden liegenden Halmstängel und dessen Blattwerk, der Futterfluss im Aufnahmebereich der Zinken abreißt und deshalb Futter- bzw. Ernteverluste eintreten, weil die Zinkenabstände der benachbarten Zinken einer Pick up zu große Lücken darstellen. Einerseits muss die Pick up große und dichte und hohe Futterbestände problemlos und stopfungsfrei aufnehmen und andererseits aber ebenso geringe und lichte kurze Futterbestände möglichst verlustfrei aufnehmen. Hinzu kommt, dass der Massendurchsatz des Gutstroms prinzipiell eine größere Fahrgeschwindigkeit zulässt, welches aber mit größeren Erntegutverlusten einhergehen kann. Diese Verluste gilt es zu minimieren.

Die Erfindung hat sich daher zum Ziel gesetzt, die Leistungsfähigkeit einer Aufsammelvorrichtung bzw. Pick up und die Qualität deren Recharbeit durch geringe Erntegutverluste zu verbessern.

Gelöst wird die Aufgabe der Erfindung mit den kennzeichnenden Merkmalen der unabhängigen Ansprüche. Weitere vorteilhafte Ausgestaltungen der Erfindung sind den abhängigen Ansprüchen, der Beschreibung und den Figurendarstellungen zu entnehmen.

Die Erfindung sieht vor, die Überdeckungsbreite, d.h. die Breite der Spurlinie der einzelnen Zinken einer Pick up variabel verkleinern oder vergrößern zu können, und dabei auch den Abstand der Lücken zwischen den Spurlinien untereinander variabel verkleinern oder vergrößern zu können.

Erfindungsgemäß geschieht dieses dadurch, dass der Aufsammelrotor um eine Hochachse drehbar derart eingestellt werden kann, dass er einen Anstellwinkel relativ zur Fahrtrichtung einnehmen kann. Der Verstellwinkel kann auch System immanent dauerhaft eingestellt sein. Der Verstellvorgang kann sowohl stufenweise als stufenlos als auch manuell oder auch durch einen Stellantrieb, beispielsweise mittels eines Hydraulikzylinders fernverstellbar durchgeführt werden.

Durch die Fahrbewegung des Trägerfahrzeugs und durch die Umlaufbewegung der Rechzinken projiziert die Zinkenspitze eines Federschenkels eine gedachte Spurlinie auf den Boden als Aufstandsfläche des Trägerfahrzeugs. Bei üblichen wenn gleich hohen Fahrgeschwindigkeiten von etwa 15 km/h und einer Drehfrequenz von etwa 20 Hz erzeugt die Projektion auf die Aufstandsfläche eine Spurlinie, die dem Wesen nach eine gestrichelte Linie darstellt, da sich die Zinkenspitze mit jeder Umdrehung des Zinkenrotors dem Boden nähert und im Laufe der fortschreitenden Drehbewegung sich wieder von diesem entfernt.

Dieser Vorgang wiederholt sich periodisch mit jeder Umdrehung der Aufnahmetrommel der Pick up. Sind dabei mehrere Zinken in ein- und derselben Rotationsebene angeordnet, so wiederholt sich dieser Vorgang nunmehr mit der Frequenz aus dem Produkt der Drehfrequenz des Zinkenrotors und der Anzahl der in einer Rotationsebene angeordneten Zinken während eben einer vollen Umdrehung des Zinkenrotors, so dass die Abstände, d.h. die Lücken innerhalb der gestrichelten Linie als Spurlinie geringer werden, wobei allerdings durch die begrenzte Anzahl der Möglichkeiten der räumlichen Unterbringung dieser Zinken diese Lücken bei hohen Fahrgeschwindigkeiten aber nicht identisch zu Null verschwinden. Sowohl der axiale Abstand der Zinkenschenkel als Lücke innerhalb der Spurlinien als auch die bei größeren Fahrgeschwindigkeiten erzeugten Lücken innerhalb der Spurlinien begünstigen bei geringen Futterbeständen die Erntgutverluste.

Bedingt durch diese funktionalen Gegebenheiten zwischen Fahrgeschwindigkeit des Trägerfahrzeugs, der Drehzahl bzw. Winkelgeschwindigkeit des Zinkenrotors einer Pick up und der Anzahl der Rechzinken innerhalb der Rotationsebene des Zinkenrotors, und der Tatsache, dass sich die radial vom Drehzentrum des Zinkenrotors nach außen erstreckenden Schenkel der Rechzinken nur innerhalb der Lücken zwischen den Abstreifbügeln bewegen können, können die Zinken in axialer Richtung der Aufnahmetrommel nicht beliebig nahe aneinander gerückt werden, da die Abstreifbügel schon aus Stabilitätsgründen eine Mindestbreite gegen Verformung aufweisen müssen, um ihre Funktion tatsächlich erfüllen zu können.

Die Erfindung sieht somit vor, bei konstantem Zinkenabstand k den mittleren Abstand x der Spurlinien dadurch zu verringern, indem die gesamte Pick up inklusive des Aufsammelrotors in einem Anstellwinkel φ schräg zur Fahrtrichtung F steht bzw. der Anstellwinkel φ verstellbar ist. Dabei kann zugleich die Überstrichbreite der Zinkenspitze quer zur Fahrtrichtung vergrößert oder verkleinert und damit variiert werden.

Aufgrund der trigonometrischen Abhängigkeiten zwischen dem Anstellwinkel φ, dem axialen Zinkenabstand k und dem Flugkreisdurchmesser D der Zinkenspitzen lassen sich der mittlere Abstand x der Spurlinien und die Breite y der Spurlinien mathematisch wie folgt darstellen:

$$x = k * \cos \varphi$$

$$y = D/2 * \sin \varphi$$

bzw. mit R = D/2

$$y = R * \sin \varphi$$

hierbei bedeuten x = mittlerer Abstand der Spurlinien
k = axialer Zinkenspitzenabstand
φ = Anstellwinkel
y = Breite der Spurlinie

Mit zunehmendem Anstellwinkel φ rücken somit die mittleren Spurlinien enger zusammen und gleichzeitig nimmt dabei die Breite Y der Spurlinien zu.

Damit ist ersichtlich, dass der Anstellwinkel φ sowohl Einfluss auf den Abstand der mittleren Spurlinien, als auch auf die Strichbreite y und damit Einfluss auf die Qualität der Rech- und Aufsammelqualität nimmt. Die Erfindung ist nachfolgend anhand eines Ausführungsbeispiels näher erläutert und dargestellt.

**Ausführungsbeispiel**

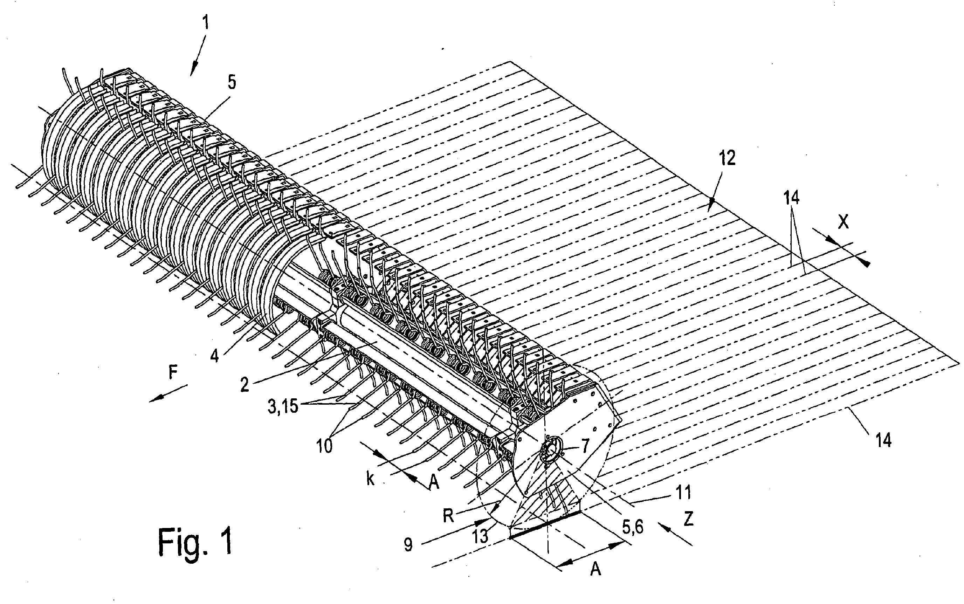

In **Fig. 1** ist eine Aufsammelvorrichtung 1 als. Pick up in einer perspektivischen Ansicht dargestellt, wobei ein Teil der Pick up 1 durch weglassen der Abstreifbügel 4 offen gelegt ist, so dass der Aufsammel- bzw. Zinkenrotor 2 mit dessen Rechzinken 3 freiliegend besser erkennbar ist. Der mit der Winkelgeschwindigkeit ω angetriebene Aufsammelrotor 2 ist in einem Maschinengestell 5 endseitig an den Lagerblechen 6 in Lagergehäusen 7 abgestützt und drehbar gelagert. Ebenfalls gestellfest am Maschinengestell 5 abgestützt sind die Abstreifbügel 4, die sich zwischen den Federschenkeln 15 der Rechzinken 3 befinden. Es kann sich hierbei sowohl um eine gesteuerte als auch ungesteuerte Pick up 1 handeln, welches nicht erfindungswesentlich ist. Die Funktionsweise einer Pick up 1 ist dem Fachmann hinreichend bekannt, so dass auf diese nicht näher eingegangen werden muss.

Auf dem Zinkenrotor 3 sind in dem Ausführungsbeispiel 4 Rechzinken angeordnet, die mit der Winkelgeschwindigkeit w bzw. mit der Umlauffrequenz f umlaufen. Die Zinkenspitzen 10 der Rechzinken 3 beschreiben einen Konturenkreis 9 mit dem Durchmesser D bzw. dem Radius R, wobei der Kreismittelpunkt identisch ist mit der Rotationsachse 11 des Zinkenrotors 2. Die Fahrtrichtung der Pick up ist mit F gekennzeichnet. Vereinbarungsgemäß soll in Fig.1 sich die Rotationsachse 11 des Aufsammelrotors 2 bzw. Zinkenrotors rechtwinkelig zum Fahrtrichtungsvektor F und parallel mit Abstand zum Boden 12 als Aufstandsebenen verlaufend erstrecken. Jeweils vier Federschenkel 15 der Rechzinken 3 liegen in einer Umlaufebene 13, die durch den Kreis mit dem Durchmesser D bzw. dem Radius R gekennzeichnet ist.

Bedingt durch die Vorwärtsbewegung F, kombiniert mit der Umlaufbewegung w der Rechzinken 3, soll die Projektion der umlaufenden Zinkenspitzen 10 per Definition eine gedachte mittlere Spurlinie 14 auf dem Boden hinterlassen. Der Begriff mittlere Spurlinie soll sich darauf beziehen, dass die Mittellinien der kreisrunden Federschenkel 15 an den Zinkenspitzen 10 an diesen austreten bzw. enden sollen, wobei dieser Endpunkt der Mittellinien die gedachte Spurlinie 14 erzeugen soll. Der Abstand x der parallel zueinander verlaufenden Spurlinien 14, erzeugt durch die Zinkenspitzen der axial zueinander beabstandeten Federschenkel 15, ist somit bei einem Anstellwinkel = 0° mit dem mittleren Zinkenabstand k identisch.

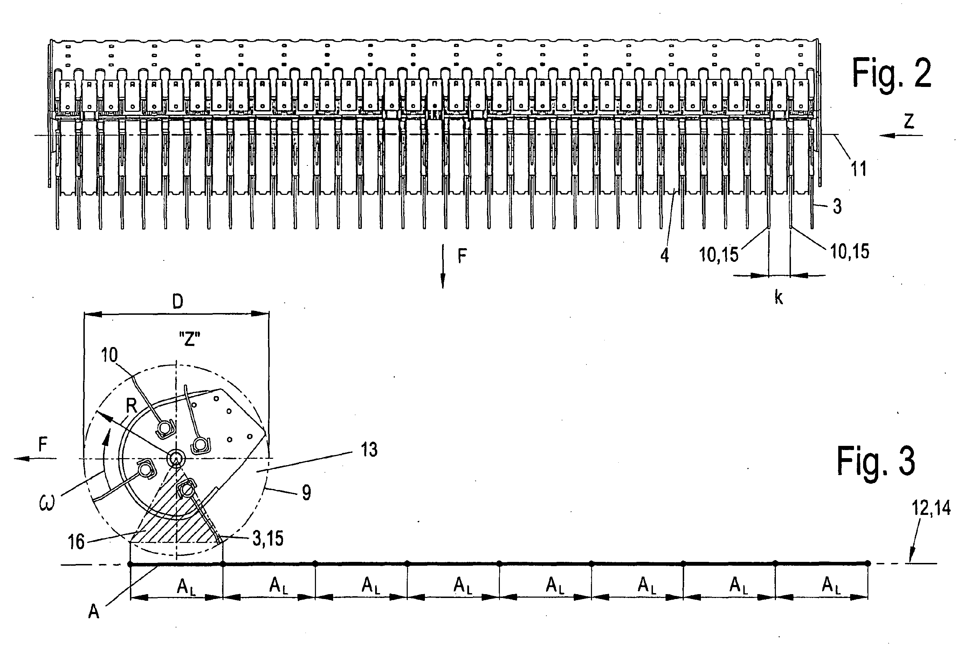

Fig. 2 zeigt die Pick up gemäß Fig. 1 in einer Draufsicht und **Fig.3** zeigt die Seitenansicht der Pickup gemäß Ansicht "Z".

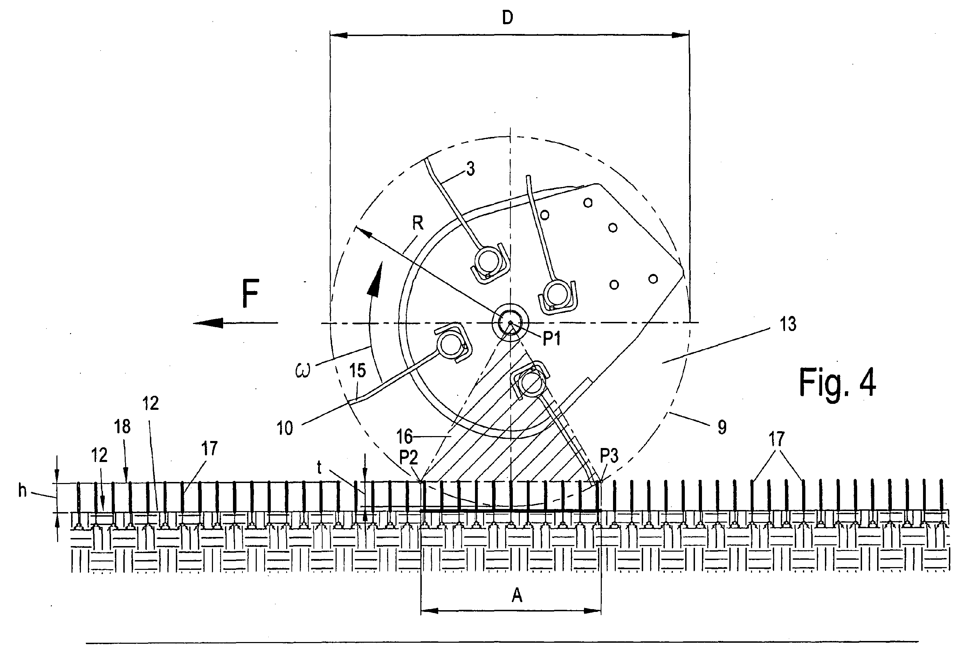

**Fig. 4** zeigt die Ansicht "Z" in Verbindung mit einem Schnitt durch das Bodenrelief einschließlich einer gemähten Flache, welche durch die Stoppeln 17 symbolisiert ist. Die Stoppellänge h soll in dem Ausführungsbeispiel 40 mm betragen, der Durchmesser D des Konturenkreises 9 soll 500mm und somit der Radius R = 250 mm betragen. Lotrecht unter der Rotationsachse 11 ist ein gedachtes gleichschenkliges Dreieck definiert durch die Punkte P1,P2,P3, als Sextant 17 schraffiert dargestellt. Punkt P1 und die Rotationsachse 11 sind exakt identisch, wobei die unteren Dreieckspunkte P2 und P3 auf der gleichen Höhe wie die Stoppelenden der Stoppel 17 und damit in der Schnittebenen 18 der Mähklingen eines Mähwerks liegen. Dadurch stellt sich die größte Eintauchtiefe t der Zinkenspitzen 10 unterhalb der Schnittebenen 18, die mathematisch unter den zuvor getroffenen Angaben errechenbar ist, gerundet auf 34 mm ein, so dass der Freiraum der Zinkenspitzen 10 gegenüber dem Boden ca. 6mm beträgt. Die horizontale parallel zum Boden bzw. der Aufstandsebene 12 abgegriffene Abgrifflinie A der Zinkenspitzen 10 in der Ebene der Stoppelenden bzw. Schnittebenen 18 entspricht unter den zuvor getroffenen Annahmen dem Radius R des Flugkreises 9. Die Drehfrequenz des Zinkenrotors 2 beträgt etwa 120 U/min, welches einer Frequenz von 2Hz entspricht. Da die Anzahl der Rechzinken 3 innerhalb einer Umlaufebene 13 vier betragt, beträgt die Kontaktfrequenz $f_k$ der Zinkenspitzen mit der Schnittebene 18 nunmehr 8Hz, so dass der zeitliche Abstand des Eintauchens der Zinkenspitzen in die Schnittebene 18 der Stoppelenden 0,125 Sekunden beträgt. Die Fahrgeschwindigkeiten von Pick up's variieren je nach Leistung des Trägerfahrzeugs und den Futterverhältnissen etwa zwischen etwa 5km/h und 15km/h. Bei einer durchschnittliche zugrunde gelegten Fahrgeschwindigkeit von ca. 7,2 km/h bzw. 2m/s. Bei einer Kontaktfrequenz $f_k$ von 8Hz erfolgt das erneute Eintauchen einer Zinkenspitze periodisch in Längenabständen $L_A$ von 2m/s/8 = 250mm. Welches bedeutet, dass unter diesen Bedingungen die Abgrifflängen $A_L$ sich quasi lückenlos aneinander reihen, da der Längenabstand $A_L$ identisch ist mit dem Abgriff A, wie etwa in Fig. 3 dargestellt. Dieses ist jedoch nur dann der Sonderfall genau dann, wenn die Kontaktfrequenz $f_K$ und die Fahrgeschwindigkeit auf die zuvor definierte Situation abgestimmt sind. Bei geringeren Fahrgeschwindigkeiten überdecken sich die Abgrifflinien $A_L$, während bei größeren Fahrgeschwindigkeiten Lücken L zwischen diesen entstehen.

Bei größeren Fahrgeschwindigkeiten hingegen stellen sich somit Lücken L zwischen den einzelnen Abgriffen A auf einer Spurlinie 14 dar, wie in Fig.4 dargestellt. Bei großen Futtermengen sind diese Lücken bedeutungslos, weil sich durch die Verkettung der Stängel- und Blattwerke des Futters ein fließender Gutstrom einstellt, und der Gutstrom infolge dessen nicht abreißt. Bei geringen Futterbeständen ist dieses jedoch problematisch und daher muss die Fahrgeschwindigkeit eher abgesenkt werden, damit sich dem Wesen nach eine Überdeckung der Abgriffe A einstellt.

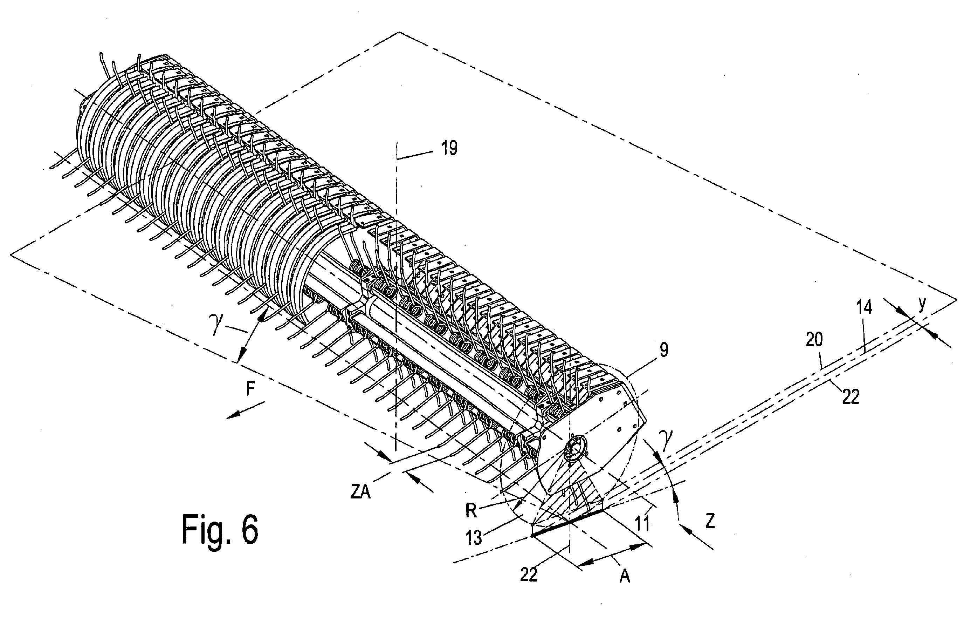

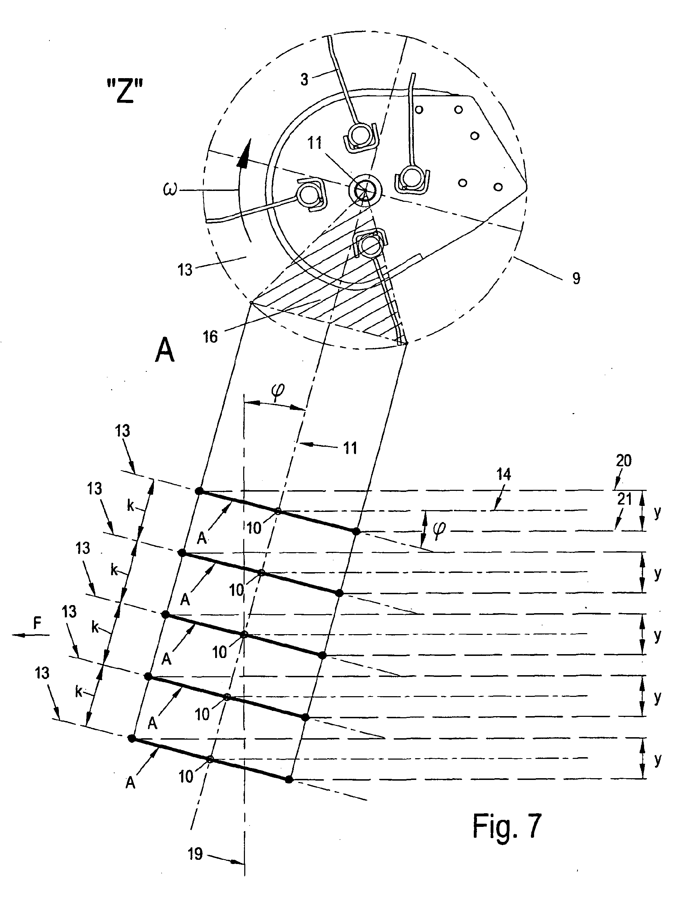

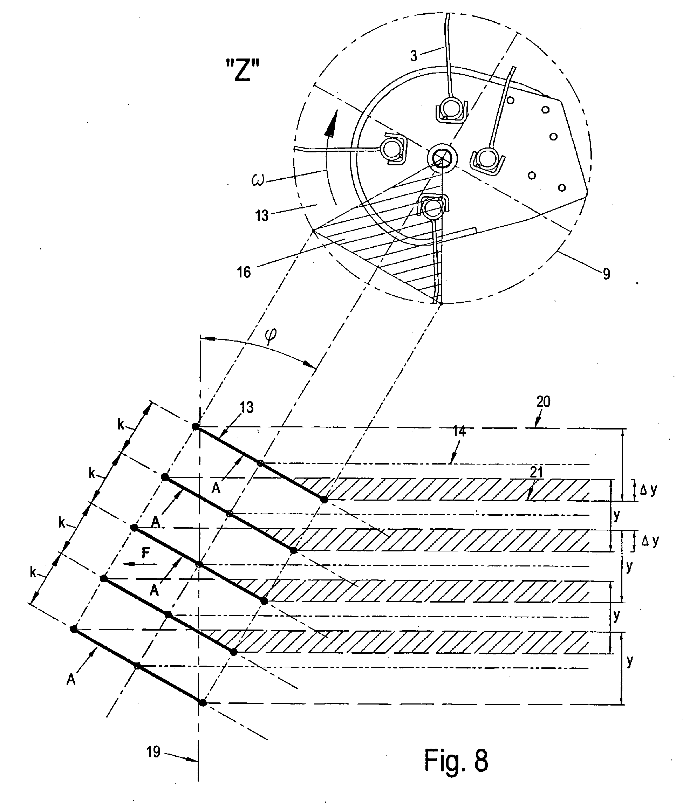

Um Ernteverluste, insbesondere bei geringen Futterbeständen, entgegenzuwirken kann die Pick up gemäß den Figuren **Fig. 6, Fig. 7 und Fig. 8** um einen Anstellwinkel φ relativ zum Fahrtrichtungsvektor F um eine aufrechte Achse 22 verdreht werden, so dass die Rotationsachse 11 einen spitzen Winkel gegenüber der Lotrechten 19, gefällt auf die Fahrtrichtung F, einnimmt. Dadurch erfährt ebenso auch die Abgrifflinie A eine Verdrehung um eine aufrechte Achse 22 in der Schnittebene 18 bzw relativ zum Boden 12, wodurch diese nunmehr in der Schnittebene18 bzw. auf dem Boden eine zweidimensionale Spurlinie mit der Strichbreite y innerhalb der Begrenzungslinien 20,21 erzeugt. Dadurch erhöht sich die Rechbreite y der Zinkenspitze 10 bzw. des einzelnen Federschenkels 15 eines Rechzinkens 3 innerhalb der Begrenzungslinie 20,21. In Fig.8 ist die Situation analog Fig. 6 mit einem noch größeren Anstellwinkel γ im Beispiel γ=30° dargestellt als in Fig. 6, infolge dessen sich die Spurbreiten der benachbarten Spurlinien mit ihren Spurbreiten y sogar um das Maß Δy überschneiden, so dass in diesem Fall die ganze Arbeitsbreite 23 der Pickup 1 von den Zinkenspitzen 10 quer zur Fahrtrichtung F lückenlos überdeckt wird. Der Anstellwinkel φ bewegt sich erfindungsgemäß vorzugsweise innerhalb der Grenzen zwischen 0° und 30°.

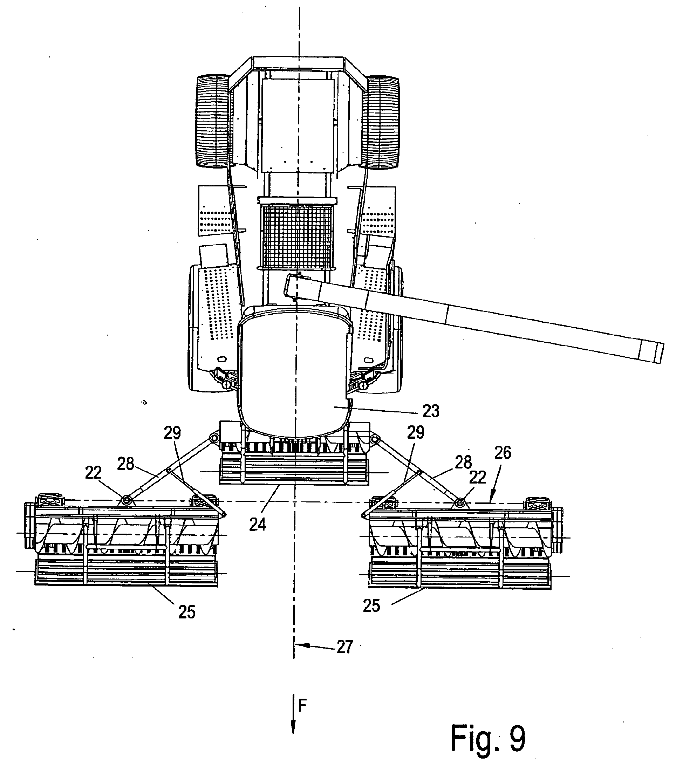

**Fig. 9** zeigt eine Draufsicht auf einen Feldhäcksler 23 mit einer Mittel-Pick-up 24, der beidseitig von dieser an längenveränderbaren Auslegern geführte Seiten-Pick-up's 25 zugeordnet sind, die in der Normalstellung zueinander ausgerichtet sind.

In der Normalstellung befinden sich alle Aufsammelrotore 2 der Pick up's 24,25. in einer Stellung parallel zur Lotrechten 26, welche sich auf die vertikale Längsmittelebene 27 des Trägerfahrzeugs bezieht, so das der Anstellwinkel φ = 0° beträgt. Die beiden äußeren Seiten-Pick-up's 25 nehmen das Erntegut auf und fördern es in bekannter Weise in Richtung der vertikalen Längsmittelebene 27, von wo aus es dann von der Mittel-Pick up 24 aufgenommen und weiter in Richtung des Einzugs des Feldhäckslers 23 gefördert wird.

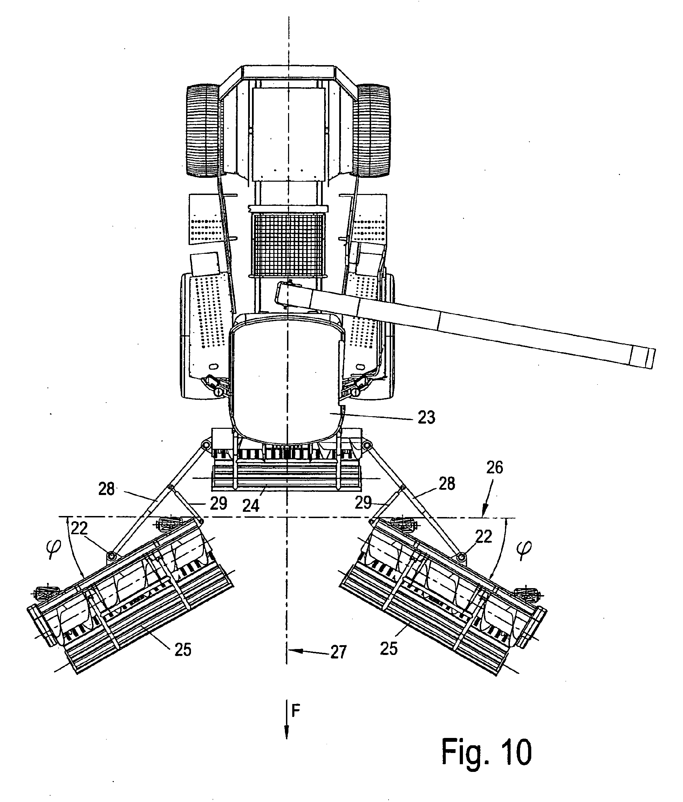

**Fig. 10** zeigt ein Ausführungsbeispiel der Anwendung der Erfindung, wobei analog zur Fig. 9 jetzt aber die um den Anstellwinkel φ angestellten Seiten-Pick-up's schräg gestellt sind. Dazu sind die in ihrem Anstellwinkel φ verstellbare Pick up's 25 mit einer Stellvorrichtung 29 ausgestattet, die es ermöglicht, den Anstellwinkel φ im einfachsten Fall manuell und in Stufensprüngen, oder alternativ dazu diesen mit einer mechanischen mit Hilfsenergie betreibbaren Stellvorrichtung 29 stufenlos zu verstellen. In vorteilhafter Weise kann die Schrägstellung durch eine Stellvorrichtung 29, vorzugsweise ausgeführt als hydraulische betätigte Stellantriebe, fernverstellbar aus der Fahrerkabine heraus vorgenommen werden.

Die Fernverstellung ermöglicht es zudem, dass damit die Verstellung verfahrenstechnisch im laufenden Arbeitsprozess an diesem angepasst und durchgeführt werden kann. Dieses ist besonders dann von Vorteil, wenn innerhalb eines Schlages die Futterbestände stark variieren.

Die Schrägstellung bzw. die verfahrenstechnische Anpassung an den laufenden Ernteprozess kann auch in Verbindung mit elektronisch gesteuerten Stelleinrichtungen 29 erfolgen, indem die Futterdichte im laufenden Gutfluss des Arbeitsprozesses lastabhängig, z.B. durch Drehmomenterfassung an dem Zinkenrotor 2 der Pick up 1, und/oder auch an anderen Arbeits- oder Antriebsorganen, die am Arbeitsprozess teilnehmen, erfasst wird, und/oder beispielsweise auch durch die sensorische Erfassung der Futterdichte des noch auf dem Boden liegend Ernteguts, wobei die dabei generierten Messwerte einem $\mu$-Controller zur Auswertung zugeführt werden, der seinerseits ein Stellsignal zur Betätigung des Stellorgans 29 generiert.

Die Erfindung ist keineswegs auf die Anwendung von außenliegenden Seiten-Pick-up's in Verbindung mit Feldhäckslern beschränkt, sondern sie kann ebenfalls auch auf einzelne Pick up's, die mittig an Trägerfahrzeugen geführt sind, angewandt werden. Sie kann ebenso auch für andere Erntemaschinen in der Landtechnik, z.B. in Verbindung mit Selbstladewagen oder Ballenpressen, angewandt werden.

Somit bietet die Erfindung gleichermaßen eine verfahrenstechnische Grundlage zur Steuerung des Arbeitsprozesses, einmal im Hinblick auf zu vermeidende Ernteverluste und andererseits auch zum Betreiben der jeweiligen Erntemaschinen im optimalen Leistungsbereich, wodurch die Wirtschaftlichkeit und damit auch die Leistungsfähigkeit derartiger Landmaschinen insgesamt verbessert werden kann.

**Bezugszeichenliste**

| | |
|---|---|
| 1 | Pick up, Aufammelvorrichtung |
| 2 | Aufsammelrotor, Zinkenrotor |
| 3 | Rechzinken, Federzinken |
| 4 | Abstreifbügel |
| 5 | Maschinengestell |
| 6 | Lagerblech |
| 7 | Lagergehäuse |
| 8 | |
| 9 | Konturkreis |
| 10 | Zinkenspitze |
| 11 | Rotationsachse |
| 12 | Boden , Aufstandsebene |
| 13 | Umlaufebene |
| 14 | Spurlinie |
| 15 | Federschenkel |
| 16 | Sextant |
| 17 | Stoppel |
| 18 | Schnittebene |
| 19 | Lotrechte |
| 20 | Begrenzungslinie einer Überstrichbreite |
| 21 | Begrenzungslinie einer Überstrichbreite |
| 22 | aufrechte Achse |
| 23 | Feldhäcksler |
| 24 | Mittel-Pick up |
| 25 | Seiten-Pick up |
| 26 | Lotrechte |
| 27 | vertikale Längsmittelebene |
| 28 | Ausleger |
| 29 | Stellvorrichtung |
| $\omega$ | Winkelgeschwindigkeit, Umlaufgeschwindigkeit |
| $A_L$ | Längenabstände $A_L$ |
| D | Flugkreisdurchmesser |
| F | Fahrtrichtung, Vorwärtsbewegung, Fahrtrichtungsvektor |
| f | Drehfrequenz |
| $f_K$ | Kontaktfrequenz |
| h | Stoppellänge |
| k | Zinkenabstand |
| t | Eintauchtiefe |
| R | Radius des Flugkreisdurchmesser |
| x | mittlerer Abstand der Spurlinien |
| y | Strich- / Überstrichbreite |
| $\varphi$ | Anstellwinkel |
| A | Abgrifflinie |

**Patentansprüche**

1. Verfahren zum Betreiben einer Aufsammelvorrichtung (1) zum Aufnehmen von am Boden liegendem Erntegut zum Anbau an ein Trägerfahrzeug, insbesondere Feldhäcksler, Ladewagen oder Ballenpresse, mit wenigstens einem Aufsammelrotor (2) einer Pick up, **dadurch gekennzeichnet, dass** die Strich- / Überstrichbreite der Zinkenspitzen (10) der Rechzinken (3) eines Aufsammelrotors (2) durch Schrägstellung mit einem Anstellwinkel ($\varphi$) wenigstens eines Aufsammelrotors (2) einer Pick up variiert werden kann, wobei die Aufsammelvorrichtung eine Mittel-Pick up (24) und zwei äußerte Seiten-Pick ups (25) aufweist, wobei mittels einer Stellvorrichtung (29) der Anstellwinkel ($\varphi$) der beiden Seiten-Pick ups (25) zur Veränderung der Strich- bzw. Überstrichbreite (y) relativ zur vertikalen Längsmittelebene (27) verstellbar ist, die Seiten-Pick-ups (25) das Erntegut aufnehmen und in Richtung der vertikalen Längsmittelebene (27) weiterfördern und das Erntegut von der Mittel-Pick up (24) weiter In Richtung des Einzugs des Trägerfahrzeugs gefördert wird.

2. Verfahren nach Anspruch 1, **dadurch gekennzeichnet, dass** die Stelleinrichtung zur Veränderung des Anstellwinkeis ($\varphi$) durch sensorische Erfassung von Prozessgrößen des laufenden Arbeitsprozesses erfolgen kann.

3. Verfahren nach Anspruch 1 und 2, **dadurch gekennzeichnet, dass** die Verstellung des Anstellwinkels ($\varphi$) abhängig von der Bestandsdichte des Ernteguts während des laufenden Arbeitsprozesses erfolgen kann.

4. Verfahren nach Anspruch 1, **dadurch gekennzeichnet, dass** die Verstellung des Anstellwinkels (φ) im laufenden Arbeitsprozess an diesem angepasst und durchgerührt werden kann.

5. Verfahren nach Anspruch 4, **dadurch gekennzeichnet, dass** die Stellvorrichtung (29) zur Verstellung des Anstellwinkels (φ) fernverstellbar aus der Fahrerkabine fes Trägerfahrzeugs vorgenommen betätigt werden kann.

6. Aufsammelvorrichtung (1) zum Betreiben des Verfahrens zum Aufnehmen von am Boden liegendem Erntegut zum Anbau an ein Trägerfahrzeug, insbesondere Feldhäcksler, Ladewagen oder Ballenpresse, mit wenigstens einem Aufsammelrotor (2) einer Pick up, **dadurch gekennzeichnet, dass** die Aufsammelvorrichtung eine Mittel-Pick up (24), zwei Seiten-Pick ups (25) und eine Stellvorrichtung (29) aufweist, mit der der Anstellwinkel (φ) der beiden Seiten-Pick ups (25) relativ zur vertikalen Längsmittelebene (27) verstellbar ist, wodurch die Strich-/ Überstrichbreite (y) der Zinkenspitzen (10) der Rechzinken (3) der beiden Seiten-Pick ups (25) varllerbar ist,

7. Vorrichtung nach Anspruch 6, **dadurch gekennzeichnet, dass** die Seiten-Pick ups (25) eine Stellvorrichtung (29) und einen längenveränderbaren Ausleger (28) aufweisen.

8. Vorrichtung nach Anspruch 6, **dadurch gekennzeichnet, dass** die Stellvorrichtung (29) zur Veränderung des Anstellwinkels (φ) mechanisch mittels Hilfsenergie betätigt werden kann.

9. Vorrichtung nach Anspruch 8, **dadurch gekennzeichnet, dass** die Stellvorrichtung (29) zur Veränderung des Anstellwinkels (φ) hydraulisch betätigt werden kann.

10. Vorrichtung nach Anspruch 5, **dadurch gekennzeichnet, dass** der Verstellbereich des Anstellwinkels (φ) vorzugsweise im Bereich von 0° bis 30° liegt,

**Claims**

1. A method of operating a collecting device (1) for picking up crop material lying on the ground, for attachment to a carrier vehicle, in particular a forage harvester, a load truck or a bale press, comprising at least one collecting rotor (2) of a pick-up, **characterised in that** the strip/coverage width of the tine tips (10) of the rake tines (3) of a collecting rotor (2) can be varied by inclination at a setting angle (φ) of at least one collecting rotor (2) of a pick-up, wherein the collecting device has a central pick-up (24) and two outer side pick-ups (25), wherein the setting angle (φ) of the two side pick-ups (25) is adjustable by means of an adjusting device (29) for varying the strip or coverage width (y) relative to the vertical longitudinal central plane, the two side pick-ups (25) pick up the crop material and convey it further in the direction of the vertical longitudinal central plane (26) and the crop material is further conveyed in the direction of the intake of the carrier vehicle by the central pick-up (24).

2. A method according to claim 1 **characterised in that** the adjusting device for varying the setting angle (φ) can be effected by sensor detection of process parameters of the running working process.

3. A method according to claim 1 and claim 2 **characterised in that** adjustment of the setting angle (φ) can be effected in dependence on the stand density of the crop material during the running working process.

4. A method according to claim 1 **characterised in that** in the running working process adjustment of the setting angle (φ) can be adapted to said process and can be effected.

5. A method according to claim 4 **characterised in that** the adjusting device (29) for adjusting the setting angle (φ) can be actuated under remote control from the driving cabin of the carrier vehicle.

6. A collecting device (1) for performing the method for picking up crop material lying on the ground for attachment to a carrier vehicle, in particular a forage harvester, a load truck or a bale press, comprising at least one collecting rotor (2) of a pick-up, **characterised in that** the collecting device has a central pick-up (24), two side pick-ups (25) and an adjusting device (29) with which the setting angle (φ) of the two side pick-ups (25) is adjustable relative to the vertical longitudinal central plane (27), whereby the strip/coverage width (y) of the tine tips (10) of the rake tines (3) of the two side pick-ups (25) is variable.

7. A device according to claim 6 **characterised in that** the side pick-ups (25) have an adjusting device (29) and a variable-length boom (28).

8. A device according to claim 6 **characterised in that** the adjusting device (29) for varying the setting angle (φ) can be actuated mechanically by means of auxiliary power.

9. A device according to claim 8 **characterised in that** the adjusting device (29) for varying the setting angle (φ) can be actuated hydraulically.

10. A device according to claim 5 **characterised in that** the adjusting range of the setting angle (φ) is preferably in the range of 0° to 30°.

**Revendications**

1. Procédé pour actionner un dispositif ramasseur (1) destiné à ramasser du produit récolté couché sur le sol et à être monté sur un véhicule porteur, en particulier sur une ensileuse, un véhicule de chargement ou une presse à balles, comprenant au moins un rotor ramasseur (2) d'un pick-up, **caractérisé en ce que** la largeur de passage/ratissage des pointes de dents (10) des dents de râtelage (3) d'un rotor ramasseur (2) peut être modifiée par un positionnement oblique selon un angle d'incidence (ϕ) d'au moins un rotor ramasseur (2) d'un pick-up, le dispositif ramasseur comportant un pick-up central (24) et deux pick-up latéraux extérieurs (25), l'angle d'incidence (ϕ) des deux pick-up latéraux (25) étant modifiable au moyen d'un dispositif de positionnement (29) pour faire varier la largeur de passage, respectivement de ratissage (y) par rapport au plan médian longitudinal vertical (27), les pick-up latéraux (25) ramassant le produit récolté et l'acheminant en direction du plan médian longitudinal vertical (27), et le produit récolté étant réacheminé par le pick-up central (24) en direction du moyen d'amenée du véhicule porteur.

2. Procédé selon la revendication 1, **caractérisé en ce que** le dispositif de positionnement visant à modifier l'angle d'incidence (ϕ) peut fonctionner par détection, au moyen de capteurs, de grandeurs de processus du processus de travail en cours.

3. Procédé selon la revendication 1 et 2, **caractérisé en ce que** le réglage de l'angle d'incidence (ϕ) peut s'effectuer en fonction de la densité du produit récolté, durant le processus de travail en cours.

4. Procédé selon la revendication 1, **caractérisé en ce que** le réglage de l'angle d'incidence (ϕ) peut être réalisé lors du processus de travail en cours et être adapté à celui-ci.

5. Procédé selon la revendication 4, **caractérisé en ce que** le dispositif de positionnement (29) pour régler l'angle d'incidence (ϕ) peut être actionné de manière télécommandée à partir de la cabine de conduite du véhicule porteur.

6. Dispositif ramasseur (1) destiné à mettre en oeuvre le procédé pour ramasser du produit récolté couché sur le sol et à être monté sur un véhicule porteur, en particulier sur une ensileuse, un véhicule de chargement ou une presse à balles, comprenant au moins un rotor ramasseur (2) d'un pick-up, **caractérisé en ce que** le dispositif ramasseur comporte un pick-up central (24), deux pick-up latéraux (25) et un dispositif de positionnement (29) et permet de modifier l'angle d'incidence (ϕ) des deux pick-up latéraux (25) par rapport au plan médian longitudinal vertical (27), ce qui permet de faire varier la largeur de passage/ratissage (y) des pointes de dents (10) des dents de râtelage (3) des deux pick-up latéraux (25).

7. Dispositif selon la revendication 6, **caractérisé en ce que** les pick-up latéraux (25) comportent un dispositif de positionnement (29) et un bras de longueur variable (28).

8. Dispositif selon la revendication 6, **caractérisé en ce que** le dispositif de positionnement (29) visant à modifier l'angle d'incidence (ϕ) peut être actionné mécaniquement au moyen d'une énergie auxiliaire.

9. Dispositif selon la revendication 8, **caractérisé en ce que** le dispositif de positionnement (29) visant à modifier l'angle d'incidence (ϕ) peut être actionné hydrauliquement.

10. Dispositif selon la revendication 5, **caractérisé en ce que** la plage de réglage de l'angle d'incidence (ϕ) est comprise entre 0° et 30°.

Fig. 1

EP 1 929 854 B1

# Fig. 2

Z

11

3

4    10,15    10,15

F

k

# Fig. 3

D

"Z"

10

R

F

ω

16

13

9

3,15

12,14

A

$A_L$  $A_L$  $A_L$  $A_L$  $A_L$  $A_L$  $A_L$  $A_L$

Fig. 4

"Z"

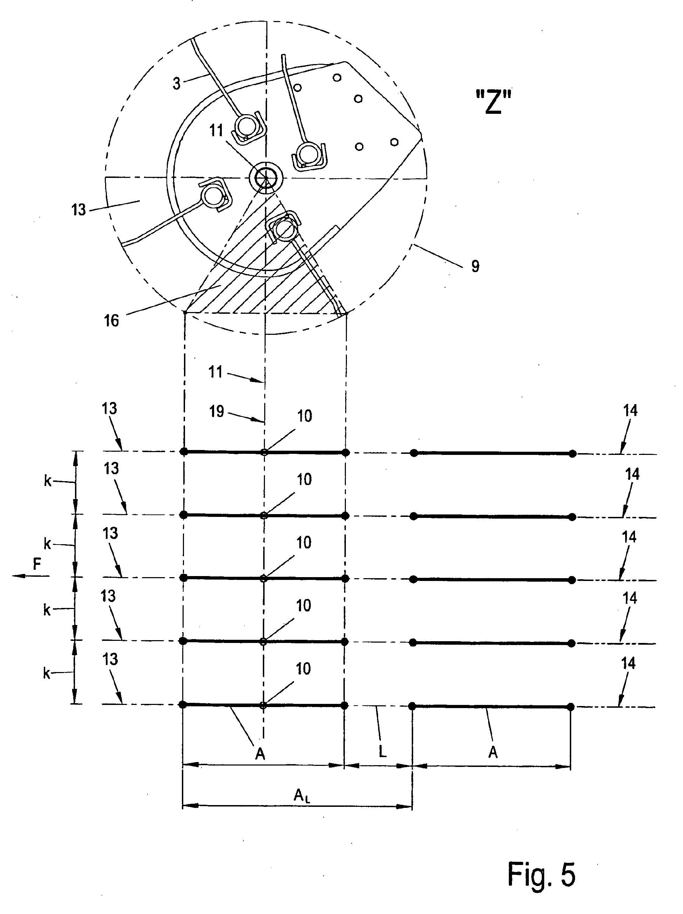

Fig. 5

Fig. 6

Fig. 7

"Z"

Fig. 8

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3634577
- US 3178876 A